(19) Europäisches Patentamt
European Patent Office
Office européen des brevets

(11) EP 0 577 992 B1

(12) **EUROPÄISCHE PATENTSCHRIFT**

(45) Veröffentlichungstag und Bekanntmachung des Hinweises auf die Patenterteilung:
**17.01.1996 Patentblatt 1996/03**

(51) Int. Cl.⁶: **B62D 7/02**, B62D 13/00

(21) Anmeldenummer: **93109347.0**

(22) Anmeldetag: **11.06.1993**

(54) **Lenkung für einen Fahrzeugkran**

Steering for a vehicle with a crane

Direction pour véhicule avec grue

(84) Benannte Vertragsstaaten:
**DE ES FR IT**

(30) Priorität: **04.07.1992 DE 4221973**

(43) Veröffentlichungstag der Anmeldung:
**12.01.1994 Patentblatt 1994/02**

(73) Patentinhaber: **KRUPP INDUSTRIETECHNIK GMBH**
**D-47226 Duisburg (DE)**

(72) Erfinder: **Becker, Otto, Dipl.-Ing.**
**D-2930 Varel 1 (DE)**

(56) Entgegenhaltungen:
**DE-A- 1 655 526**          **DE-C- 649 305**
**DE-C- 840 650**          **GB-A- 970 542**

## Beschreibung

Die Erfindung betrifft eine Lenkung für einen Fahrzeugkran mit mindestens einer vorderen lenkbaren Achsanordnung und mindestens einer hinteren lenkbaren Achsanordnung, wobei die hintere Achsanordnung über eine Lenkstangenanordnung mit der Lenkung der vorderen Achsanordnung verbunden ist. Unter "lenkbarer Achsanordnung" ist dabei sowohl eine einzelne Achse mit lenkbaren Rädern als auch eine Achsgruppe, deren Räder nur gemeinschaftlich lenkbar sind, zu verstehen.

Ein typisches Beispiel für einen solchen Kran ist ein sechsachsiger Fahrzeugkran. Er weist z.B. eine vordere Achsanordnung mit drei lenkbaren Achsen, eine aus nur aus einer Achse bestehende hintere lenkbare Achsanordnung und eine mittlere Achsanordnung mit zwei festgestellten Achsen (sog. Starrachsen) auf. Durch die beiden Starrachsen liegt der Kran, insbesondere wenn sie zwillingsbereift sind, bei Geradeausfahrt sehr stabil und spurtreu auf der Fahrbahn. Bei engen Kurvenradien, d.h. bei Volleinschlag der lenkbaren Räder, werden die Räder der beiden Starrachsen jedoch mit einem Fehlwinkel von bis zu 4° durch die Kurve geführt, was zu einem hohen Reifenverschleiß führt und eine hohe Lenkleistung erfordert.

Bei einem weiteren typischen sechsachsigen Kran sind die ersten drei und die letzten beiden Achsen lenkbar ausgeführt, während nur die vierte Achse mit feststellbaren Rädern ausgebildet ist. Dieses Fahrzeug ist zwar wesentlich wendiger, dafür neigt es aber bei schneller Straßenfahrt durch das Übersteuern der Hinterräder zu einem schwammigen Fahrverhalten.

Der Erfindung liegt die Aufgabe zugrunde, eine Lenkung für einen Kran der eingangs genannten Art anzugeben, die einerseits ein stabiles Fahrverhalten bei schneller Straßen- bzw. Autobahnfahrt und andererseits ein ausreichendes Einschlagen der Räder beim Befahren enger Kurven ermöglicht.

Diese Aufgabe wird erfindungsgemäß dadurch gelöst, daß die Lenkstangenanordnung für die hinteren Achsen zwei Lenkstangen aufweist, deren einander zugewandte Enden über ein Paar von miteinander im Eingriff stehenden Zahnsegmenthebeln verbunden sind, und daß das antreibende Zahnsegment in bezug auf den jeweiligen Eingriffspunkt mit dem angetriebenen Zahnsegment in der der Geradeausstellung der Räder entsprechenden Stellung einen kürzeren wirksamen Radius aufweist als in der dem Vollausschlag der Räder entsprechenden Stellung und - umgekehrt - daß das angetriebene Zahnsegment in der Geradeausstellung einen größeren wirksamen Radius aufweist als bei der Stellung für den Vollausschlag.

Durch die nicht runden, in bezug auf ihren Eingriffspunkt bei Geradeausfahrt insbesondere symmetrisch ausgebildeten Zahnsegmente sind im Bereich der Geradeausstellung und bei Vollausschlag der Räder unterschiedliche Übersetzungsverhältnisse der Art vorhanden, daß im Bereich der Geradeausstellung mit einem großen Übersetzungsverhältnis nur kleine Lenkausschläge der Hinterräder bewirkt werden, während bei Vollausschlag der Räder mit einem kleineren Übersetzungsverhältnis der Zahnsegmente ein ausreichend großer Lenkwinkel der Räder bewirkt wird.

Nach einer Weiterbildung der Erfindung ist das Übersetzungsverhältnis bei Vollausschlag der Hinterräder 1,2- bis 4mal, vorzugsweise 1,5- bis 3,5mal, größer als bei Geradeausstellung.

Zur Berücksichtigung des gegenüber der dritten Achse größeren Radausschlags insbesondere der letzten Achse ist vorgesehen, die wirksame Hebellänge des den Rädern der hinteren Achse zugeordneten Zahnsegmenthebels 1,1- bis 1,8mal, vorzugsweise 1,25- bis 1,6mal, kleiner zu gestalten als die wirksame Hebellänge des antreibenden Zahnsegmenthebels.

Ein Ausführungsbeispiel der Erfindung ist in der Zeichnung dargestellt und wird im folgenden näher erläutert. Es zeigen

Fig. 1      die Lenkung eines sechsachsigen Fahrzeugkrans in einer schematisierten Draufsicht und

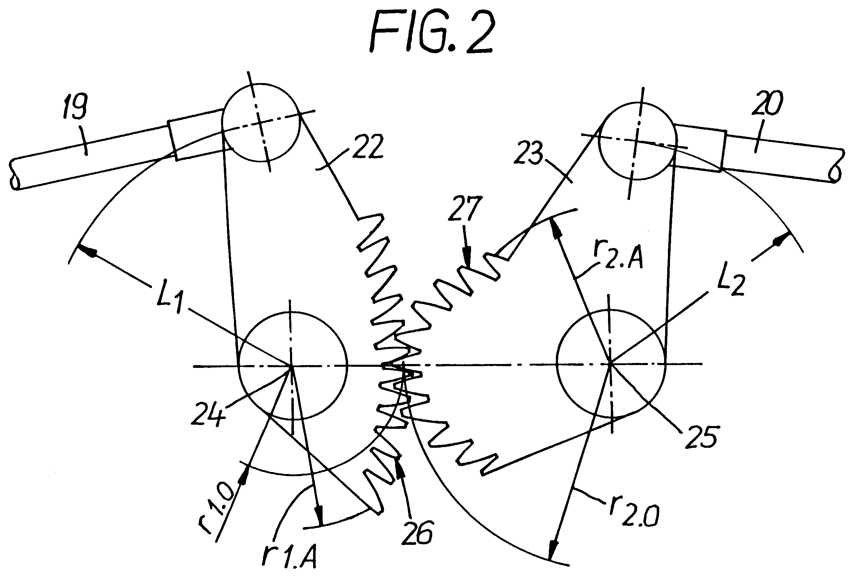

Fig. 2      ein Detail der Lenkung in einem größeren Maßstab.

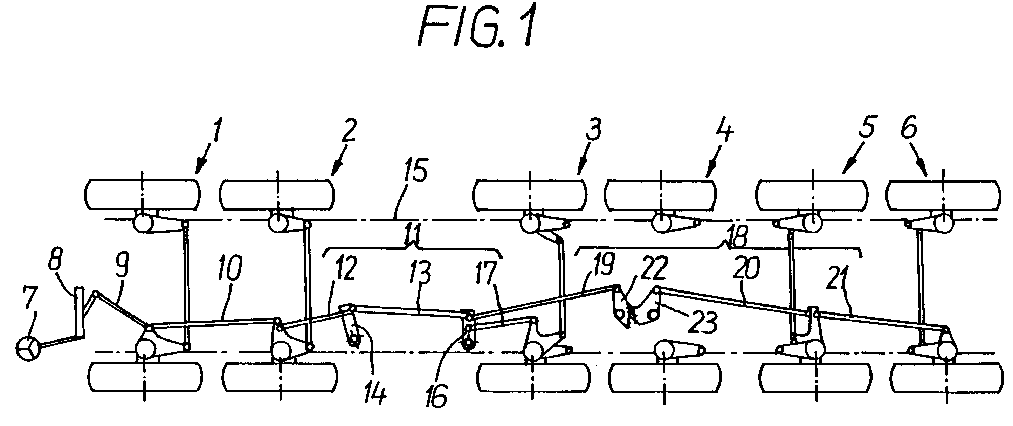

In Fig. 1 ist die Lenkung für einen Fahrzeugkran mit sechs Achsen 1 bis 6 dargestellt. Die Lenkung der Räder der Achsen 1 bis 3 ist wie bei herkömmlichen Kranfahrzeugen ausgebildet: Die von einem Lenkrad 7 vorgebbare Lenkbewegung wird von einem Lenkgetriebe 8 über eine erste Lenk- oder Kuppelstange 9 auf die Lenkung der drei ersten Achsen 1 bis 3 übertragen. Von der ersten Achse 1 wird die Lenkbewegung über eine zweite Lenkstange 10 auf die zweite Achse 2 und von dieser über eine Lenkstangenanordnung 11 zur Achse 3 weitergeleitet.

Die Lenkstangenanordnung 11 weist zwei erste Lenkstangen 12, 13 auf, die an dem freien Ende eines einarmigen Hebels 14 gelenkig miteinander verbunden sind. Der Hebel 14 ist an dem mit strichpunktierten Linien angedeuteten Rahmen 15 des Fahrzeugkrans drehbar gelagert. Die Lenkstange 13 ist mit ihrem anderen Ende mit einem weiteren, am Rahmen 15 gelagerten Hebel 16 verbunden, und zwar an dessen freien Ende. Die Lenkstangenanordnung 11 umfaßt noch eine weitere Lenkstange 17, die einerseits mit dem Hebel 16 und andererseits mit dem Lenkhebel eines Rades der Achse 3 gelenkig verbunden ist. Die Lenkstange 17 ist am Hebel 16 gegenüber der Lenkstange 13 in geringerer Entfernung vom Drehlager des Hebels angeordnet, um eine Untersetzung der Lenkbewegung der Räder der Achse 3 zu erhalten.

Die Räder der Achse 4 sind nicht lenkbar und für Geradeausfahrt festgestellt.

Die Lenkbewegung der Räder der letzten beiden Achsen 5, 6 erfolgt von dem Hebel 16 aus über eine weitere Lenkstangenanordnung 18. Diese umfaßt drei hintereinander angeordnete Lenkstangen 19, 20, 21. Die Lenkstange 19 ist mit ihrem vorderen Ende am freien Ende des Hebels 16 in der Nähe der Lenkstange 13 angelenkt. Die Lenkstangen 20, 21 sind gemeinsam an dem Lenkhebel eines Rades der Achse 5 angelenkt, die Lenkstange 21 zusätzlich mit ihrem hinteren Ende an einem Lenkhebel eines Rades der letzten Achse 6.

Das hintere Ende der Lenkstange 19 und das vordere Ende der Lenkstange 20 sind jeweils an dem freien Ende eines Zahnsegmenthebels 22 bzw. 23 angelenkt. Die Zahnsegmenthebel 22, 23 sind am Rahmen in Lagerpunkten 24, 25 gelagert und weisen miteinander in Eingriff stehende Zahnsegmente 26, 27 auf.

Die Zahnsegmente 26, 27 weisen jeweils eine symmetrische, von einer Kreisbogenform abweichende Form auf, wobei die jeweiligen Symmetrieachsen bei Geradeausstellung der Räder mit der gedachten Verbindungslinie der Lagerpunkte 24, 25 zusammenfallen.

Das Zahnsegment 26 weist an der Symmetrieachse einen kleinen wirksamen Radius $r_{1.0}$ und an dem von der Symmetrieachse wegweisenden Ende einen großen wirksamen Radius $r_{1.A}$ auf. Umgekehrt ist der wirksame Radius $r_{2.0}$ des Zahnsegments 27 an der Symmetrieachse verhältnismäßig groß und der Radius $r_{2.A}$ an den von der Symmetrieachse entfernten Stellen verhältnismäßig klein. Für ein konkretes Beispiel sind folgende Maße in mm angenommen:

$$r_{1.0} = 98$$
$$r_{1.A} = 189$$
$$r_{2.0} = 217$$
$$r_{2.A} = 126.$$

Es ergibt sich somit für die Paarung der Zahnsegmente 26, 27

- bei einer Lenkung aus der Geradeausstellung ein großes Übersetzungsverhältnis von

$$i_{26/27.0} = r_{2.0}/r_{1.0} = 217/98 = 2,214$$

und damit eine verhältnismäßig kleine Lenkbewegung der Räder der Achsen 5 und 6 gegenüber der Bewegung des Hebels 16 bzw. der Lenkstange 19 und

- bei Vollausschlag der Räder ein verhältnismäßig kleines Übersetzungsverhältnis von

$$i_{26/27.A} = r_{2.A}/r_{1.A} = 126/189 = 0,667$$

und eine um den Faktor 2,214/0,667 = 3,32 größere Lenkbewegung der Räder der Achsen 5, 6 gegenüber der Bewegung des Hebels 16 bzw. der Lenkstange 19 im Vergleich zum Lenken im Bereich der Geradeausstellung.

Bei Straßenfahrt werden die Räder der letzten beiden Achsen 5, 6 zur Stabilisierung der Geradeausfahrt also bewußt unterproportional ausgelenkt bzw. es wird der Lenkausschlag nur im geringeren Maße als theoretisch erforderlich ausgeführt, während die Räder der beiden hinteren Achsen zum Befahren enger Kurvenradien sehr stark eingeschlagen werden, um die Lenkwirkung der vorderen Räder zu unterstützen.

Da die Räder der Achsen 5, 6 zumindest bei engen Kurven stärker eingeschlagen sein sollen als die Räder der fast in der Mitte des Fahrzeugkrans befindlichen Achse 3 ist die Länge $L_2$ des Hebelarms des Zahnsegmenthebels 23 bis zur Anlenkung der Lenkstange 20 beim angeführten Ausführungsbeispiel 1,4mal kleiner als die wirksame Länge $L_1$ des Hebelarms des Zahnsegmenthebels 22.

Die erfindungsgemäße Lenkung eignet sich auch für ein zweiachsiges Kranfahrzeug, bei dem die vordere und die hintere lenkbare Achsanordnung ohne Zwischenschaltung einer Achse mit für Geradeausfahrt festgestellten Rädern jeweils lediglich aus einer Achse bestehen. Die Lenkung der Räder der ersten Achse erfolgt unmittelbar vom Lenkgetriebe, während die Räder der hinteren Achse über das beschriebene Paar von Zahnsegmenthebeln gelenkt werden.

Es ist auch denkbar, zur Erhöhung des Verhältnisses der Übersetzungsverhältnisses bei Geradeausfahrt und Vollausschlag der Räder zwei Zahnsegmentgetriebe hintereinander anzuordnen.

Die zur Unterstützung der Lenkbewegung üblicherweise vorhandenen Lenkzylinder sind als bekannt vorausgesetzt und deshalb in der Zeichnung nicht mit enthalten.

## Patentansprüche

1. Lenkung für einen Fahrzeugkran mit mindestens einer vorderen lenkbaren Achsanordnung und mindestens einer hinteren lenkbaren Achsanordnung, wobei die hintere Achsanordnung über eine Lenkstangenanordnung mit der Lenkung der vorderen Achsanordnung verbunden ist, **dadurch gekennzeichnet,** daß die Lenkstangenanordnung (18) zwei Lenkstangen (19, 20) aufweist, deren einander zugewandte Enden über ein Paar von miteinander in Eingriff stehenden Zahnsegmenthebeln (22, 23) verbunden sind und daß das antreibende Zahnsegment (26) in bezug auf den jeweiligen Eingriffspunkt mit dem anderen Zahnsegment (27) in der der Geradeausstellung der Räder entsprechenden Stellung einen kürzeren wirksamen Radius ($r_{1.0}$) aufweist als in der dem Vollausschlag entsprechenden Stellung (Radius $r_{1.A}$) und - umgekehrt - daß das angetriebene Zahnsegment (27) in der Geradeausstellung einen größeren wirksamen Radius ($r_{2.0}$) aufweist als bei der Stellung für den Vollausschlag (Radius $r_{2.A}$).

2. Lenkung nach Anspruch 1, dadurch gekennzeichnet, daß die Zahnsegmente (26, 27) in bezug auf ihren Eingriffspunkt bei Geradeausfahrt symmetrisch ausgebildet sind.

**3.** Lenkung nach Anspruch 1 oder 2, dadurch gekennzeichnet, daß das durch die jeweils zugeordneten wirksamen Radien gegebene Übersetzungsverhältnis der Zahnsegmente (26, 27) bei Vollausschlag der Räder der Hinterachse (5, 6) 1,2- bis 4mal, vorzugsweise 1,5- bis 3,5mal, größer ist als bei der Geradeausstellung der Räder.

**4.** Lenkung nach einem der Ansprüche 1 bis 3, dadurch gekennzeichnet, daß die wirksame Hebellänge ($L_2$) des den Rädern der hinteren Achse (5, 6) zugeordneten, angetriebenen Zahnsegmenthebels (23) 1,1- bis 1,8mal, vorzugsweise 1,25- bis 1,6mal, kleiner ist als die wirksame Hebellänge ($L_1$) des antreibenden Zahnsegmenthebels (22).

## Claims

**1.** Steering assembly for a mobile crane with at least one front steerable axle arrangement and at least one rear steerable axle arrangement, said rear axle arrangement being connected to the steering of the front axle arrangement via a steering rod arrangement, characterised in that the steering rod arrangement (18) has two steering rods (19, 20), their ends facing one another being connected via a pair of intermeshed gear segment levers (22, 23); and that in the position corresponding to the straight steering position of the wheels, the driving gear segment (26) has a shorter effective radius ($r_{1.0}$) relative to the respective point of engagement with the other gear segment than when in the position corresponding to full steering deflection (radius $r_{1.A}$), and that, conversely, the driven gear segment (27) has a larger effective radius ($r_{2.0}$) in the straight steering position than in the position for full steering deflection (radius $r_{2.A}$).

**2.** Steering assembly according to Claim 1, characterised in that the gear segments (26, 27) are constructed symmetrically relative to their point of engagement during straight travel.

**3.** Steering assembly according to Claim 1 or 2, characterised in that when the wheels of the rear axle (5, 6) are in full steering deflection, the transmission ratio of the gear segments (26, 27) given by the respectively allocated effective radii is 1.2-to 4-times, preferably 1.5- to 3.5-times, greater than when the wheels are in straight steering position.

**4.** Steering assembly according to one of Claims 1 to 3, characterised in that the effective lever length ($L_2$) of the driven gear segment lever (23) allocated to the wheels of the rear axle (5, 6) is 1.1- to 1.8-times, preferably 1.25- to 1.6-times, smaller than the effective lever length ($L_1$) of the driving gear segment lever (22).

## Revendications

**1.** Direction pour une grue automobile, comportant au moins un ensemble d'essieu avant dirigeable et au moins un ensemble d'essieu arrière dirigeable, cet ensemble d'essieu arrière dirigeable étant relié à la direction de l'ensemble d'essieu avant, par l'intermédiaire d'un ensemble de barres de direction,
    caractérisée

- en ce que l'ensemble (18) des barres de direction présente deux barres de direction (19, 20) dont les extrémités tournées l'une vers l'autre sont reliées par l'intermédiaire d'une paire de leviers à secteurs dentés (22, 23) engrenant l'un avec l'autre, et
- en ce que le secteur denté entraînant (26) présente, par rapport à chaque point d'engrènement concerné avec l'autre secteur denté (27) dans la position correspondant à la position en ligne droite des roues, un rayon efficace plus court (rl.0) que dans la position correspondant au braquage maximal (rayon rl. A), et
- inversement - en ce que le secteur denté entraîné (27) présente, dans la position en ligne droite, un rayon efficace plus grand (r2.0) que dans la position correspondant au braquage maximal (rayon r2.A).

**2.** Direction suivant la revendication 1, caractérisée en ce que les secteurs dentés (26, 27) sont réalisés symétriques par rapport à leur point d'engrènement lors de la course en ligne droite.

**3.** Direction suivant la revendication 1 ou la revendication 2, caractérisée en ce que le rapport de transmission des secteurs dentés (26, 27), donné par chacun des rayons efficaces concernés, dans le cas du braquage maximal des roues de l'essieu arrière (5,6), est 1,2 à 4 fois, de préférence 1,5 à 3,5 fois, plus grand que dans le cas de la position en ligne droite des roues.

**4.** Direction suivant l'une des revendications 1 à 3, caractérisée en ce que le rapport de la longueur efficace de levier (L2) du levier à secteur denté (23) entraîné, associé aux roues de l'essieu arrière (5,6), est plus petit de 1,1 à 1,8 fois, de préférence de 1,25 à 1,6 fois, que la longueur efficace (L1) du levier à secteur denté (22) entraînant.

# FIG.1

EP 0 577 992 B1

# FIG. 2

EP 0 577 992 B1